# EUROPÄISCHE PATENTANMELDUNG

(11) **EP 3 260 248 A1**
(43) Veröffentlichungstag der Anmeldung: **27.12.2017**
(21) Anmeldenummer: 17176426.9
(22) Anmeldetag: 16.06.2017
(51) Int. Cl.: B25J 15/08, B25J 15/02, B25J 19/00

(54) **GREIFVORRICHTUNG**

(30) Priorität: 17.06.2016 DE 102016111124
(71) Anmelder: Schunk GmbH & Co. KG Spann- und Greiftechnik, 74348 Lauffen am Neckar (DE)
(72) Erfinder: Becker, Ralf, 71672 Marbach (DE); Drab, Michael, 73033 Göppingen (DE); Ohlheiser, Michael, 74927 Eschelbronn (DE)
(74) Vertreter: DREISS Patentanwälte PartG mbB

(57) **Zusammenfassung**

Greifvorrichtung (10) mit wenigstens einer verfahrbaren Backe (12, 14), mit einem Antrieb (24) zum Verfahren der Backe (12, 14) in eine Greifposition und mit einer elektromagnetischen Bremseinrichtung (60), die eine Greifkraft zur Greifkrafterhaltung bei Abschaltung des Antriebs (24) bereit stellt, wobei eine Einstellvorrichtung (66) zur Bereitstellung unterschiedlich hoher Greifkräfte an der Bremseinrichtung (60) vorgesehen ist.

## Beschreibung

Die Erfindung betrifft eine Greifvorrichtung mit wenigstens einer axial verlagerbaren Backe, an der ein Greiffinger anordenbar ist. Derartige Greifvorrichtungen sind in vielfältiger Art und Weise bekannt. Insbesondere können solche Greifvorrichtungen als Parallelgreifvorrichtungen ausgebildet werden, mit denen Gegenstände gegriffen oder gespannt werden können. Solche Greifvorrichtungen können auch am freien Ende eines Roboterarms vorgesehen sein um Gegenstände umzusetzen oder zu montieren. Auch denkbar ist, dass Gegenstände mit solchen Greifvorrichtungen gehalten werden, während sie einer Bearbeitung unterzogen werden.

Die Greifvorrichtung kann dabei einen Festanschlag und lediglich eine Backe mit einem daran angeordneten Finger vorsehen. Denkbar ist auch, dass die Greifvorrichtung zwei aufeinander zu und voneinander weg verfahrbare Backen vorsieht, an welchen angeordnete Finger zum Greifen von Gegenständen vorgesehen sind.

Bei derartigen Greifvorrichtungen findet häufig ein Elektromotor als Antrieb Verwendung. Bei Stromlosschaltung des Elektromotors ist eine Greifkrafterhaltung sicherzustellen. Hierzu finden elektromagnetische Bremseinheiten Verwendung, die bei Bestromung des Motors ebenfalls bestromt werden und damit keine Bremskraft entfalten. Bei Abschaltung des Motorstroms wird mehr oder weniger zeitgleich auch die Bremseinheit stromlos geschaltet, wodurch diese ihre Bremswirkung entfaltet.

Die maximal mögliche Greifkraft, welche erhalten bleiben kann, hängt dabei von den Materialeigenschaften der Reibeflächen und einer gegebenenfalls vorhandenen Vorspannung ab. Die manuelle Kraft zum Öffnen der Backen bei eingefallener Bremse ist stets gleich hoch und kann in der Regel nicht ohne weiteres von einer menschlichen Person aufgebracht werden.

Gerade bei Stromlosschaltung des Systems ist es wünschenswert, dass die Backen von menschlichen Personen vorzugsweise ohne zusätzliches Werkzeug aus ihrer Greifposition zurück in eine Öffnungsposition bewegt werden können.
Der Erfindung liegt die Aufgabe zu Grunde, eine solche Greifvorrichtung bereitzustellen, die einen technisch einfachen Aufbau aufweist, und dennoch funktionssicher arbeitet. Insbesondere soll eine Greifvorrichtung bereitgestellt werden, die zum einen eine ausreichend hohe Greifkrafterhaltung bereitstellt, wobei die Backe oder die Backen der Greifvorrichtung auf einfache Art und Weise aus ihrer Greifposition in eine Öffnungsposition bewegt werden können.

Diese Aufgabe wird mit einer Greifvorrichtung gemäß Patentanspruch 1 gelöst. Es ist folglich vorgesehen, dass eine Einstellvorrichtung zur Bereitstellung unterschiedlich hoher Greifkräfte an der Bremseinrichtung vorgesehen ist. Die Greifkraft, beziehungsweise die Greifkrafterhaltung kann folglich in Abhängigkeit einer geforderten Greifkrafterhaltung bereitgestellt werden. Die geforderte Greifkrafterhaltung hängt letztlich von der Greifaufgabe ab. Bei kleineren Bauteilen ist es ausreichend, wenn die Bremseinrichtung geringe Greifkräfte aufrecht erhält. Ein manuelles Öffnen der Greifvorrichtung durch eine menschliche Person kann bei geringen Greifkräften ohne weiteres durchgeführt werden. Bei größeren und schwereren Bauteilen kann es erforderlich sein, eine höhere Greifkraft mittels der Bremseinrichtung aufrecht zu erhalten. Durch Vorsehen der Einstellvorrichtung kann folglich eine Greifkrafterhaltung in optimaler Höhe bereitgestellt werden.

Ein manuelles Eingreifen einer menschlichen Person in den automatisierten Greifvorgang ist insbesondere im Rahmen von Mensch-Roboter-Kooperationen erforderlich. Dabei muss gewährleistet werden, dass keine zu hohen Greifkräfte an der Greifvorrichtung vorliegen, um eine Verletzungsgefahr der mit der Maschine kooperierenden Menschen zu vermeiden und um den von der Maschine gegriffenen Gegenstand entnehmen zu können.

Ferner ist es vorteilhaft, wenn die Bremseinrichtung zur Bereitstellung unterschiedlich hoher Greifkräfte unterschiedlich stark bestromt wird. In der Regel sind die elektromagnetischen Bremseinrichtungen so aufgebaut, dass die Bremse bei Stromlosschaltung einfällt, also die maximale Bremskraft bereitgestellt wird. Bei geringer Bestromung der Bremseinrichtung wird folglich die maximale Bremskraft gering verringert. Bei höherer Bestromung der Bremseinrichtung wird die Bremskraft entsprechend verringert. Bei maximaler Bestromung der Bremseinrichtung ist die Bremseinrichtung vorzugsweise vollständig freigegeben; es findet keine Bremswirkung statt.

Die Einstellvorrichtung kann dabei derart ausgebildet sein, dass die Bestromung der Bremseinrichtung stufenlos erfolgt. Insofern kann eine optimale Anpassung der Bremskrafterhaltung an den jeweils zu greifenden Gegenstand gewährleistet werden.

Dabei ist es denkbar, dass die Einstellvorrichtung derart ausgebildet ist, dass die Verstellung der Einstellvorrichtung manuell oder automatisch erfolgt. Ist eine Vielzahl von gleichartiger Greifaufgaben zu erledigen, so kann es vorteilhaft sein, die Einstellvorrichtung manuell auf eine bestimmte Bremskrafterhaltung einzustellen. Allerdings ist auch denkbar, dass eine automatische Einstellung der Einstellvorrichtung.

Dabei kann es vorteilhaft sein, wenn zu greifende Gegenstände mit Greifcodes versehen sind, und wenn die Einstellung der Einstellvorrichtung in Abhängigkeit der Greifcodes erfolgt. Hierdurch kann gewährleistet werden, dass eine optimale Greifkrafterhaltung für den zu greifenden Gegenstand bereitgestellt wird. Durch Vorsehen der Greifcodes am zu greifenden Gegenstand kann eine falsche Einstellung der Einstellvorrichtung vermieden werden.

Der zu greifende Gegenstand kann auch über eine Bildverarbeitung aufgenommen und über einen Abgleich mit einer Datenbank, in der bekannte Gegenstände hinterlegt sind, erkannt werden. Die Daten der bekannten Gegenstände können so hinterlegt sein, so dass eine optimale Greifkrafterhaltung gewährleistet sein kann. Ferner ist denkbar, dass der zu greifende Gegenstand dem Berliner bekannt ist, und damit auch die dafür erforderliche Greifkrafterhaltung.

Besonders vorteilhaft ist, wenn eine Auslesevorrichtung vorgesehen ist, die die Greifcodes automatisch ausliest und wenn die Einstellung der Einstellvorrichtung in Abhängigkeit der Greifcodes automatisch erfolgt. Der Greifcode kann dabei beispielsweise als RFID-Tag am zu greifenden Gegenstand vorgesehen sein und von einem an der Greifvorrichtung vorgesehenen RFID-Lesegerät ausgelesen werden. Das Lesegerät gibt dann den ausgelesenen Greifcode an die Einstellvorrichtung weiter, so dass die vorzusehende Greifkraft beziehungsweise die daraus resultierende Greifkrafterhaltung automatisch bereitgestellt werden kann.

Generell kann diese Art von geregelter Bremseinrichtung an allen Arten von Antriebskinematiken angebaut werden, insbesondere auch an Roboterachsen, um auch dort im Kollisionsfall mechanisch nachgeben zu können bei möglichst geringen einwirkenden äußeren Kräften.

Eine bevorzugte konstruktive Ausführungsform ergibt sich dann, wenn der Antrieb eine Spindelwelle antreibt, wenn die Backe eine Spindelmutter aufweist, die mit der Spindelwelle zusammenwirkt, und wenn die Bremseinrichtung die Spindelwelle festsetzt. Der Antrieb kann dabei die Spindelwelle unmittelbar oder mittelbar, beispielsweise über ein Getriebe, ein Reibrad oder einen Riemen antreiben. Dabei ist denkbar, dass die Bremseinrichtung entweder ebenfalls unmittelbar oder mittelbar, über das Getriebe, das Reibrad oder den Riemen auf die Spindelwelle wirkt.

Zur Sicherstellung einer ausreichenden Greifkraft beim Abschalten des Antriebs, insbesondere auch zum Ausgleich von Fertigungstoleranzen oder sich aufgrund von Temperaturschwankungen ergebenden Toleranzen die Bauteile zwischen dem Antrieb und der Backe betreffend, kann es vorteilhaft sein, dass die Spindelmutter an der Backe in Achsrichtung schwimmend zwischen Federelementen derart gelagert ist, dass die Federelemente beim Beaufschlagen der Backe gegen den Gegenstand auslenken und dadurch eine Vorspannkraft bereit stellen. Durch Bereitstellen der Vorspannkraft kann folglich eine geringe axiale Verlagerung der Spindelwelle gegenüber der Backe toleriert werden, ohne dass Greifkraft eingebüßt wird.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist. Es zeigen:
- Figur 1: eine Vorderansicht einer ersten erfindungsgemäßen Greifvorrichtung;
- Figur 2: einen Schnitt entlang der Linie II in Figur 1;
- Figur 3: die Rückansicht der Greifvorrichtung gemäß Figur 1,
- Figur 4: einen Schnitt durch die Greifvorrichtung gemäß Figur 3 entlang der Linie IV;
- Figur 5: die Unteransicht der Greifvorrichtung gemäß Figur 1 bis 4; und
- Figur 6: einen vergrößerten Ausschnitt aus Figur 2

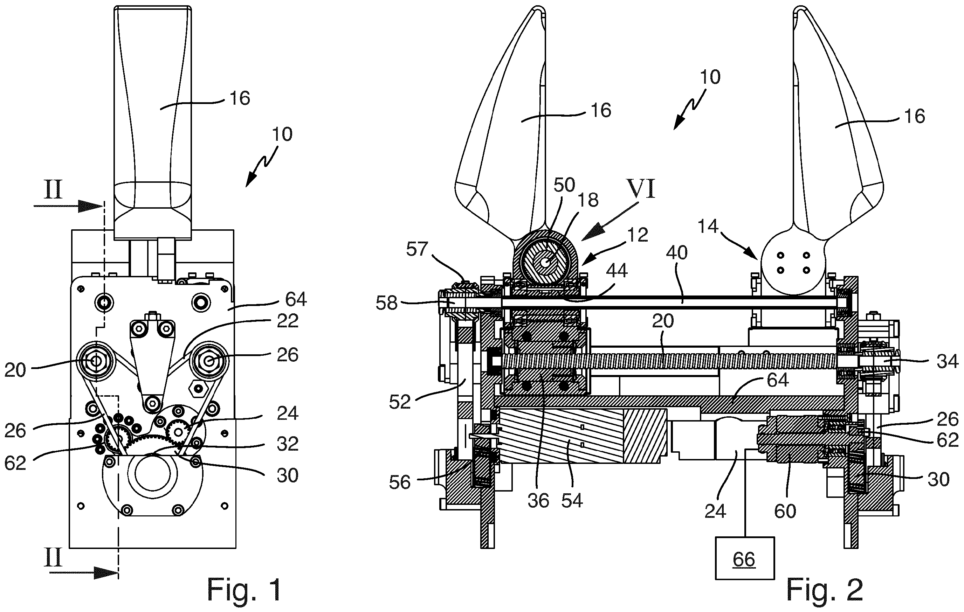

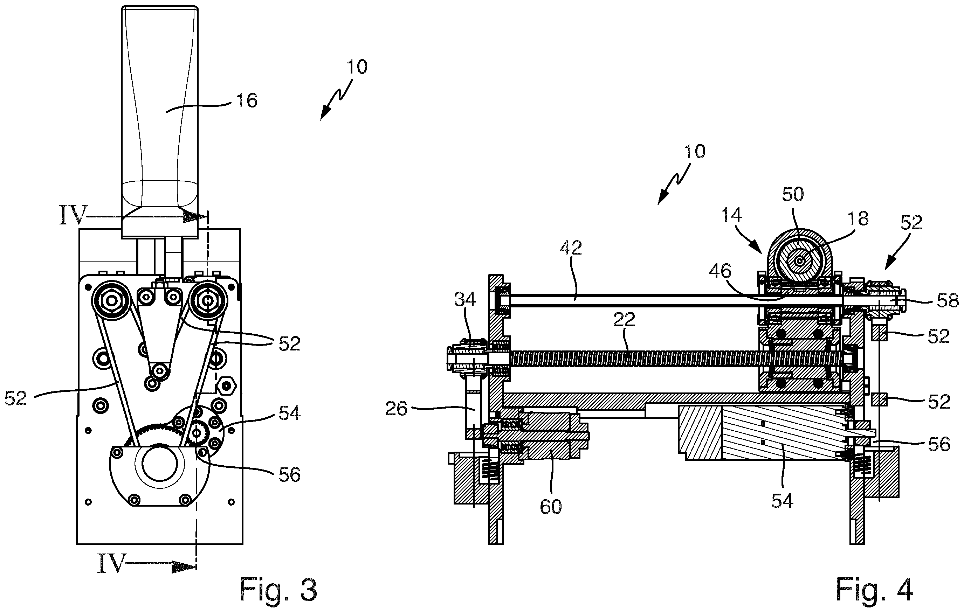

Die in den Figuren 1 bis 6 gezeigten Greifvorrichtung 10 umfasst zwei aufeinander zu und voneinander weg verlagerbare Backen 12, 14. An jeder Backe 12, 14 ist ein Finger 16 vorgesehen, der um jeweils eine Schwenkachse 18 verschwenkt werden kann. Zur Bewegung der Backen 12, 14 ist für jede Backe 12, 14 eine Welle vorgesehen, die als Spindelwelle 20, 22 ausgebildet ist. Die in den Schnitten gemäß Figuren 2 und 4 dargestellten Spindelwellen 20, 22 werden dabei von einem gemeinsamen Backenantrieb 24, der als Elektromotor ausgebildet ist, angetrieben. Zur Drehkopplung des Backenantriebs 24 mit den beiden Spindelwellen 20, 22 ist der Motorwelle 28 ein Zahnradgetriebe 30 nachgelagert, welches ein Riemenrad 32 vorsieht, über das ein Antriebsriemen 26 läuft. Über den Antriebsriemen 26 werden letztlich die beiden Spindelwellen 20, 22 in Drehbewegung versetzt. Der Riemen 26 läuft dabei über freie Endabschnitte 34 der Spindelwellen 20, 22. Über den Antriebsriemen 26 werden die beiden Spindelwellen 20, 22 vom Backenantrieb 24 synchron angetrieben.

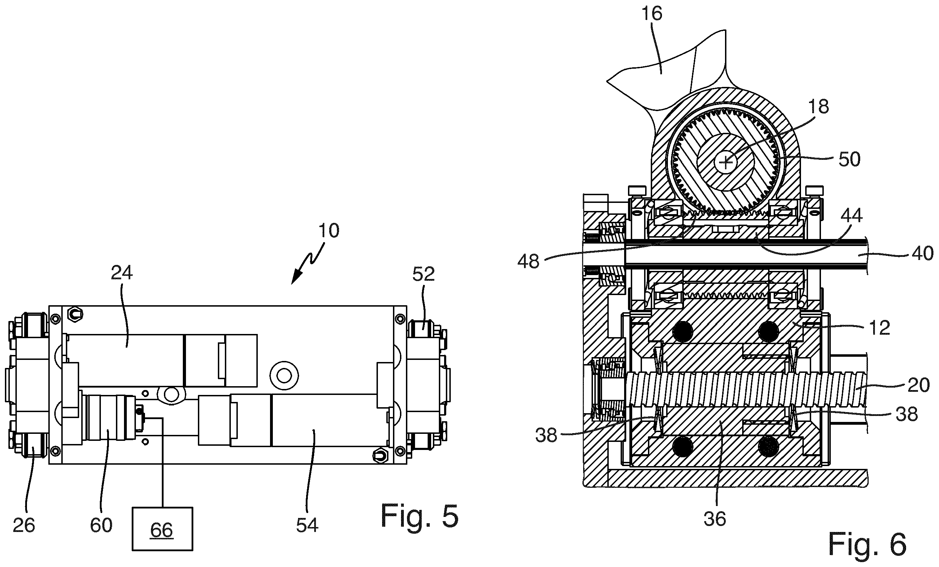

Die beiden Spindelwellen 20, 22 weisen gegenläufige Steigungen auf, so dass bei Drehbewegung der Spindelwellen in die gleiche Richtung die Backen 12, 14 aufeinander zu beziehungsweise voneinander weg bewegt werden.
Zur Bewegungskopplung der Backen 12, 14 mit den Spindelwellen 20, 22 weisen die Backen 12,14, wie aus Figur 6 deutlich wird, jeweils eine Spindelmutter 36 auf. In Figur 6 ist die Spindelmutter 36 zwischen Tellerfedern 38 in Axialrichtung schwimmend gelagert. Beim Greifen verschiebt sich dadurch die schwimmend zwischen den Tellerfedern 38 gelagerte Mutter 36 axial, wodurch eine Vorspannkraft bereitgestellt wird. Dadurch kann gewährleistet werden, dass bei Einfallen einer Bremseinheit und/oder Stromlosschaltung der Motoren dennoch ausreichend Greifkraft zur Verfügung gestellt werden kann.

Die Greifvorrichtung 10 weist ferner zwei parallel zu den Spindelwellen 20, 22 laufend angeordnete zweite Wellen in Form von Nutwellen 40, 42 auf. Die Nutwellen 40, 42 durchgreifen an den ihr zugeordneten Backen 12, 14 Nuthülsen 44, 46. Die Nuthülsen 44, 46 wirken dabei mit den Nutwellen 40, 42 derart zusammen, dass die Backen 12, 14 axial auf den Nutwellen 40, 42 verschieblich angeordnet sind, und dass beim Verdrehen der Nutwellen 40, 42 die jeweiligen Finger 16 um die zugehörigen Achsen 18 verschwenkt werden. Anstelle von Nutwellen 40,42 und Nuthülsen 40,46 können auch Keilwellen mit darauf angeordneten Keilhülsen Verwendung finden.

Die Keil- oder Nutwelle 40, 42 zeichnet sich dadurch aus, dass sie wenigstens einen radial überstehenden und/oder versenkten Mitnehmer aufweist, über den eine Drehkopplung mit der komplementär zur Keil- oder Nutwelle 40, 42 ausgebildeten Keil- oder Nuthülse 44, 46 erfolgt.
Wie aus Figur 6 deutlich wird, weisen die Nuthülsen 44, 46 auf ihrer radial äußeren Seite ein Spindelgewinde 48 auf, welches mit einem fingerseitigen Ritzel 50 derart zusammenwirkt, dass beim Verdrehen der Nuthülse 44, 46 das Ritzel um die jeweilige Achse 18 verdreht wird, so dass letztendlich der Finger 16 eine Schwenkbewegung um die jeweilige Achse 18 ausführt. Das Spindelgewinde 48 ist dabei mit dem Ritzel 50 selbsthemmend ausgebildet.

Wie aus der Ansicht nach Figur 3 deutlich wird, werden die beiden Nutwellen 40, 44 von einem gemeinsamen Keilriemen 52 in Drehbewegung versetzt. Der Keilriemen 52 wird dabei von einem Fingerantrieb 54, der ebenfalls als Elektromotor ausgebildet ist, angetrieben. Zwischen der Abtriebswelle des Fingerantriebs 54 und dem Keilriemen 52 ist ein Getriebe 56 vorgesehen. Wie aus den Schnitten gemäß Figur 2 und 4 deutlich wird, werden die Endabschnitte 58 der beiden Nutwellen 40, 42 über den Keilriemen 52 angetrieben. Durch Vorsehen des Keilriemens 52 erfolgt also eine synchrone Drehbewegung der beiden Teilwellen 40, 42.

Die beiden Motoren 24, 54 sind an einem Träger 64 angeordnet; die Spindelwellen 20, 22 und die Nutwellen 40, 42 sind an dem Träger 64 drehbar gelagert angeordnet.

Wie aus der Unteransicht gemäß Figur 5 deutlich wird, sind die beiden Antriebe 24 und 54 parallel zueinander verlaufend angeordnet. Zur Abbremsung und Festsetzung der beiden Spindelwellen 20, 22 ist eine Bremseinheit 60 vorgesehen. Die Bremseinheit 60 weist eine Bremswelle auf, an der ein Ritzel 62 vorgesehen ist. Wie aus Figur 1 deutlich wird, kämmt dieses Ritzel 62 das Riemenrad 32. Dadurch kann das Riemenrad 62 und damit der Riemen 26 und folglich die beiden Spindelwellen 20, 22 festgesetzt werden.

Wie in den Figur 2 und 5 dargestellt, ist eine Einstellvorrichtung 66 der Bremseinheit 60 zugeordnet, mit der unterschiedlich hohe Greifkräfte der Bremseinheit 60 zur Greifkrafterhaltung bei Abschaltung des Backenantriebs 24 bereitgestellt werden können. Je nach zu greifendem Gegenstand kann folglich eine unterschiedliche Greifkrafterhaltung durch Einstellung der Einstellvorrichtung 66 bereitgestellt werden. Bremseinheit 60 ist dabei so ausgebildet, dass sie bei Stromlosschaltung die maximale Bremskraft, also Greifkraft bereitstellt. Bei maximaler Bestromung, ist die Bremskraft minimal beziehungsweise Null. Die Bestromung kann stufenlos erfolgen, so das zur Bereitstellung einer geringeren Bremskraft eine höhere Bestromung und dass zur Bereitstellung einer höheren Bremskraft eine geringere Bestromung bereitgestellt wird.

Die Einstellvorrichtung 66 kann dabei manuell vom Bedienpersonal verstellt werden. Denkbar ist auch, dass ein automatisches einstellen erfolgt, beispielsweise über eine RFID-Einheit, die einen Code eines an dem zu greifenden Gegenstand vorhandenen RFID-Tag ausliest. Der zu greifende Gegenstand liefert folglich dann automatisch die Einstellung der Einstellvorrichtung 66, und damit die optimale für den zu greifenden Gegenstand bereitzustellende Greifkrafterhaltung.

Die Greifvorrichtung 10 arbeitet im Betrieb wie folgt. Zum axialen Verlagern der beiden Backen 12, 14 mit den Greiffingern 16 wird folglich der Antrieb 24 betätigt, wodurch die Spindelwellen 20, 24 über den Antriebsriemen 26 in Rotation versetzt werden. Aufgrund der Kopplung der Spindelwellen 20, 22 mit den Spindelmuttern 36 werden die beiden Backen 12, 14 aufeinander zu oder voneinander weg bewegt. Die Backen 12, 14, beziehungsweise deren Nuthülsen 44, 46 gleiten dabei in Bewegungsrichtung der Backen 12, 14 auf den Nutwellen 40. Zum Verschwenken der der Finger 16 um die jeweilige Achse 18 werden die beiden Nutwellen 40 über den Antrieb 54 in Rotation versetzt. Aufgrund der Drehkopplung der Nutwellen 40 mit den Fingern 16, die über die Nuthülsen 44, 46 und die Ritzel 50 erfolgt, wird letztlich die Schwenkbewegung der Finger 16 bewirkt. Ein Bewegen der Backen 12, 14 kann dabei unabhängig von einem Verschwenken der Finger 16 durch Ansteuern des jeweiligen Antriebs 54, 24 erreicht werden. Bei der Greifvorrichtung 10 gemäß den Figuren 1 bis 6 sind folglich für jede Backe 12, 14 eine eigene Spindelwelle 20, 22 sowie eine eigene Nutwelle 40, 42 vorgesehen.

Beim Erreichen der Greifposition wird der Backenantrieb 24 stromlos geschalten. Zeitgleich, oder kurz davor, wird die Bremseinheit 60 angesteuert beziehungsweise bestromt, um ein Bewegen des Riemens 26 zu unterbinden und um damit die Backen 12, 14 in der Greifposition festzusetzen. Ein eventuell vorhandenes Spiel oder vorhandene Toleranzen zwischen dem Antrieb 24 und der Backe 12,14 werden durch die Vorspannung der Tellerfedern 38 ausgeglichen. Der unter Vorspannung mögliche Verfahrweg der schwimmend gelagerten Spindelmutter 36 gegenüber der Backe 12,14 ist dabei größer dimensioniert als die maximal mögliche aus Spiel beziehungsweise Toleranzen resultierende Bewegung zwischen Finger 16 und Antrieb 24 bei stromlos geschaltenem Antrieb 24.

Die über die Bremseinheit 60 bereitgestellte Greifkraft ist dabei vorzugsweise derart, dass zum einen der zu greifende Gegenstand sicher gehalten werden kann und dass zum anderen das Bedienpersonal die Backe 12,14 und/oder die Finger 16 händisch in die Öffnungspositionen bewegen kann, um den gegriffenen Gegenstand zu entnehmen.

## Patentansprüche

1. Greifvorrichtung (10) mit wenigstens einer verfahrbaren Backe (12, 14), mit einem Antrieb (24) zum Verfahren der Backe (12, 14) in eine Greifposition und mit einer elektromagnetischen Bremseinrichtung (60), über die eine Greifkraft zur Greifkrafterhaltung bei Abschaltung des Antriebs bereitgestellt wird, **dadurch gekennzeichnet, dass** eine Einstellvorrichtung (66) zur Bereitstellung unterschiedlich hoher Greifkräfte an der Bremseinrichtung (60) vorgesehen ist.

2. Greifvorrichtung (10) nach Anspruch 1, **dadurch gekennzeichnet, dass** über die Einstellvorrichtung (66) die Bremseinrichtung (60) zur Bereitstellung unterschiedlich hoher Greifkräfte unterschiedlich stark bestromt wird.

3. Greifvorrichtung (10) nach Anspruch 1 oder 2, **dadurch gekennzeichnet, dass** die Einstellvorrichtung (66) derart ausgebildet ist, dass die Bestromung der Bremseinrichtung (60) stufenlos ermöglicht wird.

4. Greifvorrichtung (10) nach Anspruch 1, 2 oder 3, **dadurch gekennzeichnet, dass** die Einstellvorrichtung (66) derart ausgebildet ist, dass die Verstellung der Einstellvorrichtung manuell oder automatisch erfolgt.

5. Greifvorrichtung (10) nach einem der vorhergehenden Ansprüche, **dadurch gekennzeichnet, dass** zu greifende Gegenstände mit Greifcodes versehen sind, und dass die Einstellung der Einstellvorrichtung in Abhängigkeit der Greifcodes erfolgt.

6. Greifvorrichtung (10) nach Anspruch 5, **dadurch gekennzeichnet, dass** eine Auslesevorrichtung vorgesehen ist, die die Greifcodes automatisch ausliest und dass die Einstellung der Einstellvorrichtung in Abhängigkeit der Greifcodes automatisch erfolgt.

7. Greifvorrichtung (10) nach einem der vorhergehenden Ansprüche, **dadurch gekennzeichnet, dass** der Antrieb (24) eine Spindelwelle (20, 22) antreibt, dass die Backe (12, 14) eine Spindelmutter (36) aufweist, die mit der Spindelwelle (20, 22) zusammenwirkt, und dass die Bremseinrichtung die Spindelwelle (60) festsetzt.

8. Greifvorrichtung (10) nach Anspruch 7, **dadurch gekennzeichnet, dass** die Spindelmutter (36) an der Backe (12, 14) in Achsrichtung schwimmend zwischen Federelementen (38) derart gelagert, dass die Federelemente (38) beim Beaufschlagen der Backe gegen den Gegenstand auslenken und dadurch eine Vorspannkraft bereit stellen.

9. Antriebsmodul für Handhabungssysteme, Roboterachsen oder dergleichen, mit wenigstens einer verfahrbaren Backe (12, 14), mit einem Antrieb (24) zum Verfahren der Backe (12, 14) in eine Greifposition und mit einer elektromagnetischen Bremseinrichtung (60), über die eine Greifkraft zur Greifkrafterhaltung bei Abschaltung des Antriebs bereitgestellt wird, **dadurch gekennzeichnet, dass** eine Einstellvorrichtung (60) zur Bereitstellung unterschiedlich hoher Greifkräfte an der Bremseinrichtung (60) vorgesehen ist.

10. Antriebsmodul nach Anspruch 9, **dadurch gekennzeichnet, dass** die Einstellvorrichtung (60) gemäß einem der Ansprüche 2 bis 5 ausgebildet ist.
